# EUROPEAN PATENT SPECIFICATION

(11) **EP 1 159 832 B1**
(45) Date of publication and mention of the grant of the patent: **14.11.2007**
(21) Application number: 00912696.2
(22) Date of filing: 15.03.2000
(51) Int. Cl.: H04Q 3/00, H04M 3/46

(54) **METHOD FOR CONVERTING NUMBER IN AN INTELLIGENT TELECOMMUNICATIONS NETWORK SERVICE**
VERFAHREN ZUR NUMMERKONVERTIERUNG FÜR EINEN INTELLIGENTEN TELEKOMMUNIKATIONSNETZDIENST
PROCEDE DE CONVERSION D'UN NUMERO DANS UN SERVICE DE TELECOMMUNICATIONS DE RESEAU INTELLIGENT

(30) Priority: 15.03.1999 FI 990574
(43) Date of publication of application: 05.12.2001
(73) Proprietor: Elisa Oyj, 00520 Helsinki (FI)
(72) Inventor: MANSSILA, Jarkko, FIN-00500 Helsinki (FI)
(74) Representative: Lipsanen, Jari Seppo Einari
(86) International application number: PCT/FI2000/000209
(87) International publication number: WO 2000/056080

(56) References cited:
- WO-A1-96/21323
- WO-A1-96/29830
- US-A- 5 592 541

## Description

The present invention relates to a method, according to the preamble of claim 1, for routing a call made to an intelligent-network service to a target number of the service. The invention also relates to a corresponding system, according to the preamble of claim 3.

Methods of this kind are used, in connection with intelligent-telephone-network services, for routing incoming calls to target numbers, according to the choice of the service maintainer. The call-routing systems that are the object of the invention are similarly used to route incoming calls to an intelligent-telephone-network service in a manner defined by the service maintainer.

In this publication, the maintainer of an intelligent-telephone-network service refers to a person, company, or similar, who produces or co-ordinates the contents of a service being offered. A customer of an intelligent-telephone-network service is also equated with the maintainer of an intelligent-telephone-network service, in cases in which the customer her or himself defines the target number or numbers of the service. In turn, the intelligent-telephone-network operator refers to a tele-operator, which provides the maintainer of the intelligent-telephone-network service and its customers with the connection and other functions of the intelligent telephone network required to implement the intelligent-telephone-network service. The intelligent-telephone-network operator and the maintainer of the intelligent-telephone-network service may also be the same company.

Intelligent-telephone-network services, in connection with which the methods that are the object of this invention can be used, are generally all such intelligent-telephone-network services, in which the maintainer of the service needs to independently redefine the routing information for incoming calls made to the service. Such services include response-series and contactability-chain services.

Methods of defining a target number used in call-routing in an intelligent-telephone-network service, that are the object of the invention, are preferably used on a self-service principle through a user-interface provided by the intelligent-telephone-network operator. In this case, the maintainer of the intelligent-telephone-network service forms a telecommunications link to the control user-interface of the intelligent-telephone-network service and uses the user-interface to make the desired definitions. The user-interface may be, for example, a service based on dual-tone multi-frequency signalling, which is used through a telephone connection. The user-interface may also be, for example, a user-interface operated by means of a computer through an Internet or modem connection. The method of routing incoming calls to the intelligent-telephone-network service, on the other hand, in no way depends on the user-interface used to define the target numbers, instead the control method can equally well be operated from definitions made through an official of the tele-operator.

In methods according to the state of the art, the target number used to route calls in an intelligent-telephone-network service is thus defined by forming a telecommunications link between the customer's terminal device and the control user-interface of the intelligent-telephone-network service and by receiving, through the telecommunications link formed, the target number selected by the customer. The target number received is recorded in the service-control databases of the intelligent telephone network, or similar, to be available for use by the desired service- Thus, in methods according to the state of the art, the recorded target number is used to route a call made to the intelligent-network service. In such a method, the recorded target number is retrieved from the service database according to the service logic and the call being routed is connected to the retrieved telephone number.

A drawback of the above methods according to the state of the art is that, in connection with them, the maintainer of the intelligent-telephone-network service must use the actual telephone number of the desired target connection as the target number of the intelligent-telephone-network service. Thus, the above-described methods do not permit a virtual telephone number, i.e. a telephone number that does not, as such, correspond to any technical telephone connection, but which is connected to a technical telephone connection through variable definitions of the virtual telephone number, to be used as the target number of an intelligent-telephone-network service. One example of a virtual telephone number is a country-wide number, calls to which are subject to target-number conversion, to replace the country-wide number with an actual telephone number of the target number.

WO 96/21323 A1 discloses a method according to the preamble of claim 1.

WO 96/29830 A1 discloses another method relating to intelligent telephone network services.

The invention is intended to create an entirely new method and system for routing a call made to an intelligent-network service.

The invention is based on equipping the intelligent telephone network with a number conversion table and/or service, by means of which a virtual telephone number can be converted to an actual subscriber number corresponding to it. This conversion is preferably made before the call is routed out of the switching centre of the intelligent network, avoiding the unnecessary routing of the call back to the switching centre of the intelligent network. Thus, in connection with a call-routing method equipped with number conversion, virtual telephone numbers can be used, while the target number corresponding to the call that has been made can be retrieved from the service database in virtual number form. After this, the virtual-form target number retrieved from the service database can be converted to its corresponding technical routing number and the call can be routed to the technical routing number. According to the invention, an intelligent-telephone-network service target-number definition method can also be created for the call-routing method disclosed above, in which the target number is received in virtual form through a telecommunications link and converted to the corresponding actual telephone number, before the call is routed.

The method according to the invention for routing a call made to an intelligent-network service to the target number of the service is characterized by what is stated in the characterizing section of Claim 1. The system according to the invention is characterized by what is stated in the characterizing section of Claim 3.

Considerable advantages are gained with the aid of the invention.

The invention permits a maintainer of an intelligent-telephone-network service and an operator of an intelligent telephone network, as well as, in appropriate cases, the customer of the intelligent-telephone-network service, to use virtual telephone numbers when defining intelligent-telephone-network services. The possibility of using virtual numbers often considerably facilitates the definition of call-routing, as, for example, the maintainers and customers of services using virtual numbers often do not even know the actual telephone number of the telephone connection that corresponds to its virtual number. Thus, the invention can allow a customer of a contactability chain, i.e. the person to be contacted, to define the telephone connection corresponding to her or his virtual number into the contactability chain, with the aid of her or his virtual number, without needing to known the telephone connection's actual telephone number.

The invention also has preferred embodiments, by means of which significant additional advantages are gained. In connection with the invention, the telephone connections used can, for example, be given above-decadal telephone numbers, it being nevertheless possible to define these connections as intelligent-telephone-network service target numbers even through telephone dual-tone multi-frequency selections, by means of virtual numbers corresponding to the connections. Above-decadal telephone numbers refer to telephone numbers, in, for example, hexadecimal form, that contain at least one numerical symbol that is not a numerical symbol in the decimal system. Using above-decadal telephone numbers allows the more efficient operation of telephone switching centres, but, prior to this invention, the use of above-decadal numbers has been problematical, in that the possessor of such a number could not define intelligent-telephone-network services to her or his connection through the dual-tone multi-frequency selections of her or his telephone.

Thus, by means of the invention, intelligent-telephone-network service target numbers can be defined by means of generally known virtual telephone numbers, so that the actual telephone numbers need not be determined for definition. The invention can also be used to facilitate implementing external user-interfaces used in the control of intelligent-telephone-network services, as the necessary number conversion can be provided in the intelligent telephone network.

In the following, the invention is examined with the aid of examples and with reference to the accompanying drawings.

Figure 1 shows the routing of a call made to an intelligent-network service and the updating of the routing, with the aid of one method according to the invention.

Figure 2 shows the routing of a call made to an intelligent-network service, with the aid of another method according to the invention.

Figure 3 shows the routing of a call made to a contactability service, with the aid of a third method according to the invention.

Figure 4 shows the checking relating to routing to an intelligent-network service, in connection with a fourth method according to the invention.

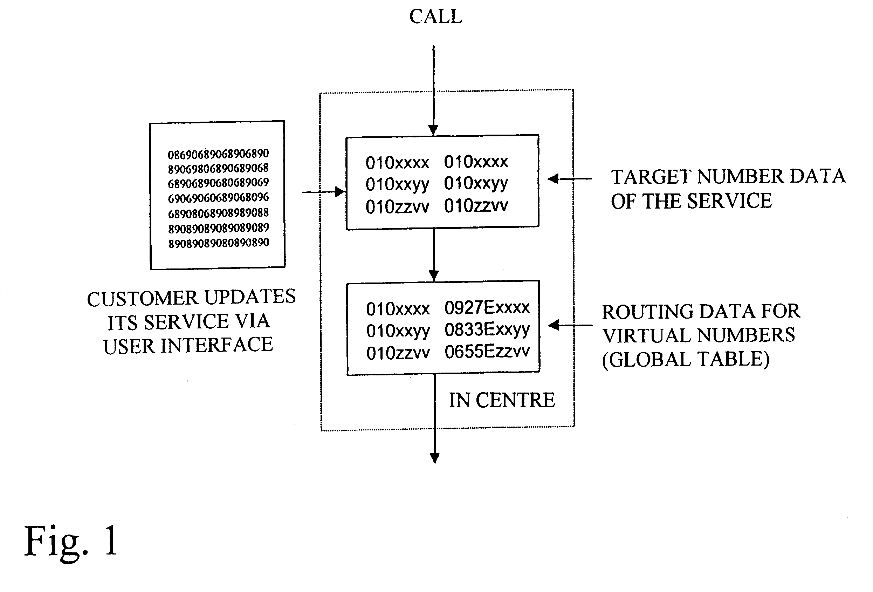

According to Figure 1, the customer or service provider defines virtual telephone numbers as the target number of the service, the virtual telephone numbers being depicted using a 010 telephone area code. The defined virtual telephone numbers are recorded in the control logic of the service or as target number data of the service database used by it. In the embodiment of the figure, the target number data is recorded in the IN centre, in the SCP, i.e. its service control point. If necessary, the target number data can also be recorded in a separate database outside the IN centre, when the SCP must retrieve the desired number information from the database, over a telecommunications link. The figure also shows a call made to the service, which is received and for which a target number, for routing the call and corresponding to the service number, is sought. Next, the call is routed forward in the IN centre, to a number-conversion routine, which retrieves the technical routing number, corresponding to the virtual number, from a global number conversion table. Once a technical routing number has been defined for the call, the call is routed out of the IN centre and routed according to the routing number. The term global number conversion table refers to the fact that the table is maintained for the use of the entire intelligent telephone network. In the embodiment of the figure, the table is recorded in the service control point, the SCP, of the relevant IN centre.

Thus, a call made to an intelligent-network service can be received in a service switching point, i.e. SSP, belonging to the IN centre controlling the connection making the call, after which the target number is converted into a technical routing number. After conversion, the call can be routed from the SSP to a telephone connection controlled by the SSP, or to another SSP, allocated to the technical routing number defined for the call.

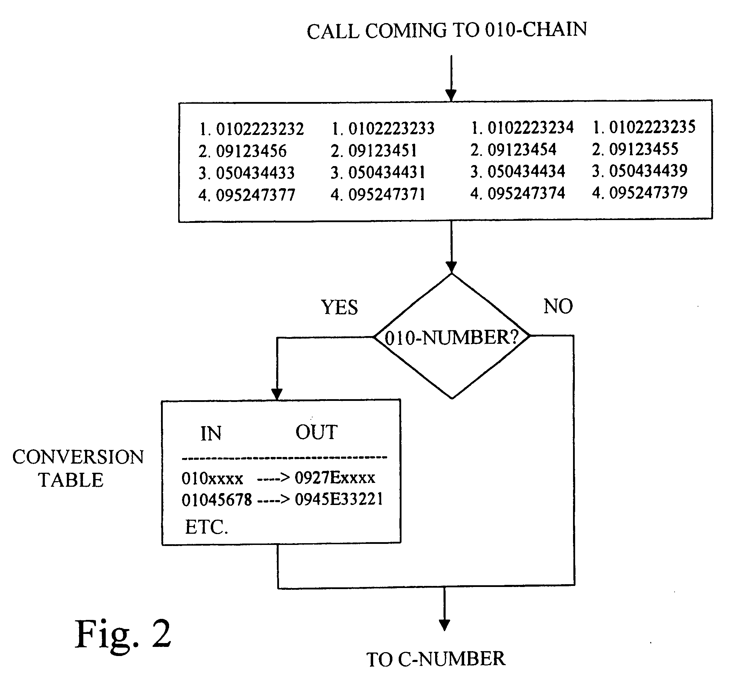

In the method in Figure 2, a call made to a number in a 010-chain is routed to the 010-chain service in a manner that is, as such, known. After this, the correct target number for the call is sought in the 010-chain service and the call is taken to a routine, which checks whether the target number obtained from the 010-chain service is still the 010-number. If the target number is not the virtual telephone number depicted by a 010-prefix, the call is routed directly forward towards the target number given for the call, i.e. the C-number. If, on the other hand, the target number obtained from the 010-chain service is a 010-number, the call is directed to a conversion table, in which the 010-number is replaced with a technical routing number.

In the embodiment of Figure 2, a conversion table is thus defined for the 010-chain logic, in which table the 010-number provisioned by the customer is converted to a real C-subscriber number, before the call is routed out of the SSP. In this embodiment, the conversion table is not recorded in the 010-chain data; instead, a separate table is used, so that the table is accessible from anywhere, from the 010-chain service.

In a preferred embodiment, both number areas and full-length numbers can be defined in the conversion table, so that it is also possible to copy the extension-number section of the 010-number to the actual technical C-subscriber number, to form the latter's extension-number section. The copying of the extension number section is illustrated in the first example of the conversion table of Figure 2, in which the entire final section of the 010-number, depicted by x-letters, is copied to form the extension-number section of the 0927E-prefix routing number. The copying algorithm can be implemented, for example, so that the section to be copied is always that section of the 0 1 0-number being compared, which remains after the removal of the 010-number, which is found in the table and having an initial section corresponding to the 010-number being compared, from the beginning of the 010-number being compared. In one embodiment of the invention, the table only defines customers' 010-numbers and above-decadal C-subscriber numbers, for which an A-number conversion and an above-decadal subscriber number are available. For example, the table can be similar to that below:

| 010-number obtained | Correct C-number |
|---|---|
| 010222xxxx | 0927E22xxxx |
| 0102224567 | 0936E224567 |
| 0102234444 | 0843E234444 |

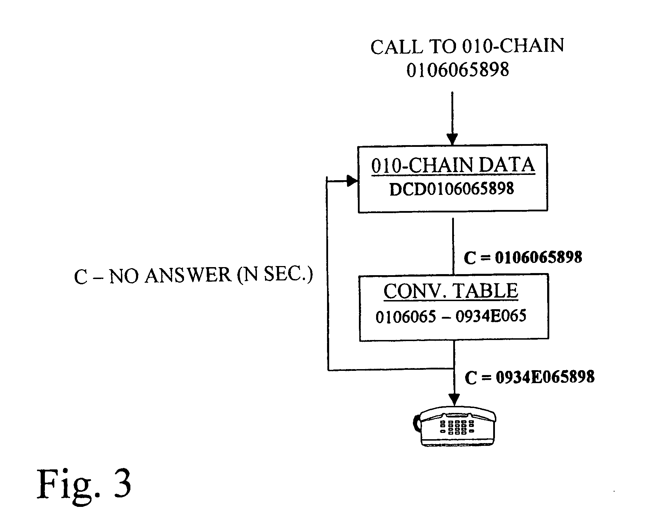

According to Figure 3, the invention can also be exploited to control calls made to a contactability chain. In the method of the figure, a call made to a 010-chain is received and the routing number, i.e. the C-subscriber number, corresponding to the 010-virtual number is retrieved from the 010-chain data. In the example, the first target number defined in the 010-chain data is the 010-number used by the person to be contacted, i.e. the same number, to which the received call was originally directed. Next, the 010-virtual number defined as the C-subscriber number is taken to the conversion routine, which checks the conversion table for the technical routing number corresponding at that moment to the 010-number. Thus, the conversion routine defines a new C-subscriber number for the call, to which an attempt is then made to connect the call. If there is no response at this new number within the set time, or if the call cannot otherwise be connected, the call is routed back to the 010-chain, according to the definitions of the contactability service. After this, an attempt is made to connect the call in a corresponding manner always to the next number in the 010-chain data, until the call is answered, the call is terminated, or there are no longer any new numbers.

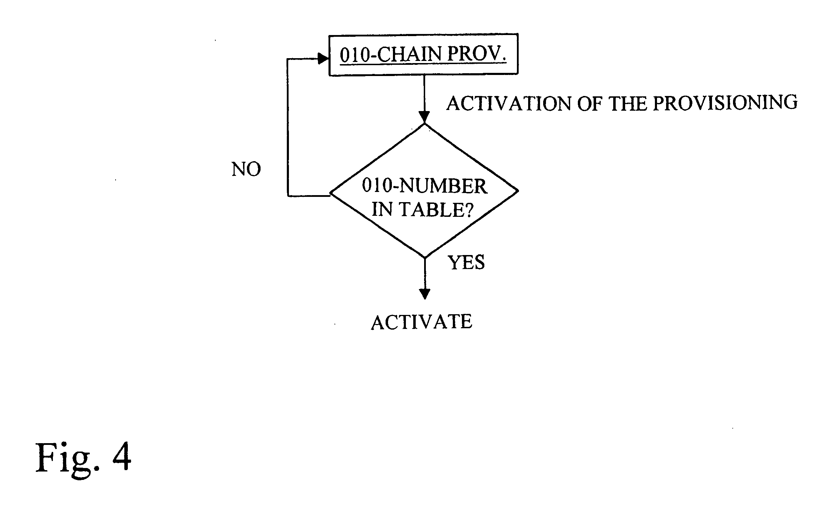

Figure 4 shows a checking operation, which can be carried out in connection with the provisioning of a 010-chain, for example, when a customer alters its 010-chain. In the method of Figure 4, a check is made whether the defined 010-number can be found in the 010-number conversion table, and, if the number cannot be found, such a number is not accepted, instead the definition attempt is returned to the start. Provisioning is activated, if the defined number is found in the 010-number conversion table.

The invention can also be used to solve the problems related to the provisioning of a virtual-number-chain service, in situations, in which the calling party identification code, i.e. the A-subscriber number, of the virtual-number-chain service's user's own line-telephone connection has been changed to a virtual number and the corresponding routing number of the real telephone connection has been changed to a so-called above-decadal number, which can be used mainly only when routing the call from an SSP to a line connection. In such cases, the customer regards her or his virtual number as the actual telephone number of her or his line-telephone connection and naturally also uses it when defining her or his line-telephone connection as a member of a virtual-number-chain.

In solutions according to the state of the art, customers themselves cannot, however, define their line-telephone connections similar to that described above, to form members of a chain, because above-decadal numerical symbols are required when defining the routing number. Dynamic A-subscriber number services also do not operate in solutions according to the state of the art, as the A-subscriber number to be sent to the telephone network and the actual routing number of the connection are different and there are no operations combining them in the telephone network. In this case, the term dynamic A-subscriber number service refers to a function of an intelligent telephone network, in which the A-subscriber number of a subscriber calling the service is identified and certain operations are then directed to this A-subscriber number. Another example of a dynamic A-subscriber number service is a dynamic transfer to a contactability chain, in which the A-subscriber number of a caller to the control number of the contactability chain is identified and the contactability chain beginning with the identified A-subscriber number is automatically selected to be active, from the customer's contactability chains. The invention permits the use of a dynamic A-subscriber number service also from a connection with a virtual A-subscriber number. Thus, the customer can, when advantageously applying the invention, use her or his 010-number when defining her or his line-connection in a 010-chain service. In an editable chain, the number can be added to the chain on the basis of the A-subscriber number.

## Claims

1. A method for routing a call made to an intelligent-network service to a target number of the service, the intelligent-network service having a service logic and a service database, the method comprising:
- receiving the call made to an intelligent-network service in a service switching point,
- retrieving the target number corresponding to the call made from the service database according to the service logic,
- the retrieved target number being in a virtual number form,
- checking, whether the target number retrieved from the service database is in a virtual number form,
- when the target number is in the virtual number form, converting the virtual-number-form target number retrieved from the service database to a corresponding technical routing number, and
- routing the call to the technical routing number,
**characterized by** the steps of
- defining a separate conversion table for the service logic of the intelligent-network service for converting the virtual-number-form target number to the technical routing number, and
- performing said step of converting the virtual-number-form target number retrieved from the service database to the corresponding technical routing number by means of the separate conversion table and before routing the call out of the service switching point.

2. A method according to Claim 1, **characterized in that** the intelligent-network service is a contactability-chain, in which case
- the contactability-chain target number corresponding to the call made to the contactability chain is retrieved, in virtual-number form, from the control table of the contactability service,
- the virtual-number-form target number retrieved from the control table of the contactability chain is converted to the corresponding technical routing number, and
- the call is routed to the technical routing number.

3. A system for routing a call made to an intelligent-network service to a target number of the service, the system comprising:
- a service logic for the intelligent-network service,
- a service database for the intelligent-network service, the service database containing a target number in the form of a virtual number,
- a service switching point,
- means for receiving the call in the service switching point,
- means for retrieving the target number corresponding to the call made, from the service database according to the service logic,
- means for checking, whether the target number retrieved from the service database is in a virtual number form,
- means for converting, when the target number is in the virtual number form, the virtual-number-form target number retrieved from the service database to a corresponding technical routing number, and
- means for routing the call to the technical routing number,
**characterized by**
- a separate conversion table for the service logic of the intelligent-network service for converting the viriual-number-form target number to the technical routing number, and
- the system being adapted to convert the virtual-number-form target number retrieved from the service database to the corresponding technical routing number by means of the separate conversion table and before routing the call out of the service switching point

## Patentansprüche

1. Verfahren zum Leitweglenken eines Rufs, der an einen intelligenten Netzdienst getätigt wird, an eine Zielnummer des Dienstes, wobei der intelligente Netzdienst eine Dienstlogik und eine Dienstdatenbank hat, wobei das Verfahren aufweist:
- Empfangen des Rufs, der an einen intelligenten Netzdienst getätigt wird, in einem Dienstvermittlungspunkt,
- Abrufen der zu dem getätigten Ruf gehörenden zielnummer aus der Dienstdatenbank gemäß der Dienstlogik,
- wobei die abgerufene Zielnummer eine virtuelle Nummernform hat,
- Prüfen, ob die aus der Dienstdatenbank abgerufene Zielnummer eine virtuelle Nummernform hat,
- wenn die Zielnummer die virtuelle Nummernform hat, Konvertieren der aus der Dienstdatenbank abgerufenen Zielnummer mit der virtuellen Nummernform in eine entsprechende technische Leitweglenkungsnummer, und
- Leitweglenken des Rufs an die technische Leitweglenkungsnummer,
**gekennzeichnet durch** die folgenden Schritte:
- Definieren einer getrennten Konvertierungstabelle für die Dienstlogik des intelligenten Netzdienstes zum Konvertieren der Zielnummer in virtueller Nummernform in eine technische Leitweglenkungsnummer, und
- Durchführen des Schritts zum Konvertieren der aus der Dienstdatenbank abgerufenen Zielnummer in der virtuellen Nummernform in die entsprechende technische Leitweglenkungsnummer mit Hilfe der getrennten Konvertierungstabelle und bevor der Ruf aus dem Dienstvermittlungspunkt leitweggelenkt wird.

2. Verfahren nach Anspruch 1, **dadurch gekennzeichnet, daß** der intelligente Netzdienst eine Erreichbarkeitskette ist, wobei in diesem Fall
- die Zielnummer der Erreichbarkeitskette, die dem an die Erreichbarkeitskette getätigten Ruf entspricht, in virtueller Nummernform aus der Steuertabelle des Erreichbarkeitsdienstes abgerufen wird,
- die aus der Steuertabelle der Erreichbarkeitskette abgerufene Zielnummer in virtueller Nummernform in die entsprechende technische Leitweglenkungsnummer konvertiert wird, und
- der Ruf an die technische Leitweglenkungsnummer leitweggelenkt wird.

3. System zur Leitweglenkung eines Rufs, der an einen intelligenten Netzdienst getätigt wird, wobei das System aufweist:
- eine Dienstlogik für den intelligenten Netzdienst,
- eine Dienstdatenbank für den intelligenten Netzdienst, wobei die Dienstdatenbank eine Zielnummer in der Form einer virtuellen Nummer enthält,
- einen Dienstvermittlungspunkt,
- eine Einrichtung zum Empfangen des Rufs in dem Dienstvermittlungspunkt,
- eine Einrichtung zum Abrufen der zu dem getätigten Ruf gehörenden Zielnummer aus der Dienstdatenbank gemäß der Dienstlogik,
- eine Einrichtung zum Prüfen, ob die aus der Dienstdatenbank abgerufene Zielnummer eine virtuelle Nummernform hat,
- eine Einrichtung zum Konvertieren der aus der Dienstdatenbank abgerufenen Zielnummer in der virtuellen Nummernform in eine entsprechende technische Leitweglenkungsnummer, wenn die Zielnummer die virtuelle Nummernform hat, und
- eine Einrichtung zum Leitweglenken des Rufs an die technische Leitweglenkungsnummer,
**gekennzeichnet durch**:
- eine getrennte Konvertierungstabelle für die Dienstlogik des intelligenten Netzdienstes zum Konvertieren der Zielnummer in virtueller Nummernform in ein technische Leitweglenkungsnummer, und
- das System, das geeignet ist, die aus der Dienstdatenbank abgerufene Zielnummer in der virtuellen Nummernform mit Hilfe der getrennten Konvertierungstabelle und, bevor der Ruf aus dem Dienstvermittlungspunkt leitweggelenkt wird, in die entsprechende technische Leitweglenkungsnummer zu konvertieren.

## Revendications

1. Procédé d'acheminement d'un appel effectué vers un service de réseau intelligent pour un numéro de cible du service, le service de réseau intelligent disposant d'une logique de service et d'une base de données de service, le procédé comprenant :
- la réception de l'appel effectué vers un service de réseau intelligent en un point de commutation du service ;
- la recherche du numéro de cible correspondant à l'appel effectué à partir de la base de données du service selon la logique du service ;
- le numéro de cible retrouvé étant sous une forme de numéro virtuel,
- la vérification de ce que le numéro de cible retrouvé à partir de la base de données du service soit sous une forme de numéro virtuel ;
- si le numéro de cible est sous la forme de numéro virtuel, la conversion du numéro de cible sous la forme de numéro virtuel retrouvé à partir de la base de données du service en un numéro d'acheminement technique correspondant, et
- l'acheminement de l'appel vers le numéro d'acheminement technique,
**caractérisé par** les étapes de :
- définition d'une table de conversion séparée pour la logique de service du service de réseau intelligent destinée à la conversion du numéro de cible sous forme de numéro virtuel dans le numéro d'acheminement technique, et
- la réalisation de ladite étape de conversion du numéro de cible sous la forme de numéro virtuel retrouvé à partir de la base de données du service en numéro d'acheminement technique correspondant par le moyen de la table de conversion séparée et avant l'acheminement de l'appel à partir du point de commutation du service.

2. Procédé selon la revendication 1, **caractérisé en ce que** le service de réseau intelligent est une chaîne de contactabilité, auquel cas :
- le numéro de cible de la chaîne de contact correspondant à l'appel effectué vers la chaîne de contactabilité est retrouvé, sous la forme d'un numéro virtuel, à partir de la table de contrôle du service de contactabilité,
- le numéro de cible sous forme de numéro virtuel retrouvé à partir de la table de contrôle de la chaîne de contactibilité est converti en numéro d'acheminement technique correspondant, et
- l'appel est acheminé vers le numéro d'acheminement technique.

3. Système destiné à l'acheminement d'un appel effectué vers un service de réseau intelligent pour un numéro de cible du service, le système comprenant :
- une logique de service destinée au service de réseau intelligent ;
- une base de données de service destinée au service de réseau intelligent, la base de données du service contenant un numéro de cible sous la forme d'un numéro virtuel ;
- un point de commutation du service ;
- un moyen de réception de l'appel au point de commutation du service ;
- un moyen de recherche du numéro de cible correspondant à l'appel effectué, à partir de la base de données du service selon la logique du service ;
- un moyen de vérification, pour savoir si le numéro de cible retrouvé à partir de la base de données du service est sous une forme de numéro virtuel ;
- un moyen de conversion, lorsque le numéro de cible est sous la forme de numéro virtuel, du numéro de cible sous la forme de numéro virtuel retrouvé à partir de la base de données du service en numéro d'acheminement technique correspondant, et
- un moyen d'acheminement de l'appel vers le numéro d'acheminement technique,
**caractérisé par** :
- une table de conversion séparée destinée à la logique de service du service de réseau intelligent pour la conversion du numéro de cible sous la forme de numéro virtuel en numéro d'acheminement technique, et
- l'adaptation du système à la conversion du numéro de cible sous la forme d'un numéro virtuel retrouvé à partir de la base de données du service en numéro d'acheminement technique correspondant par le moyen de la table de conversion séparée et avant l'acheminement de l'appel à partir du point de commutation du service.
